# EUROPEAN PATENT APPLICATION

(11) **EP 2 549 626 A1**
(43) Date of publication of application: **23.01.2013**
(21) Application number: 10847793.6
(22) Date of filing: 17.03.2010
(51) Int. Cl.: H02K 5/16

(54) **INVERTER-DRIVEN DYNAMO ELECTRIC MACHINE AND SYSTEM, BEARING, AND END BRACKET FOR SAME**

(71) Applicant: Hitachi, Ltd., Tokyo 100-8280 (JP)
(72) Inventor: OBATA, Koji, Hitachi-shi Ibaraki 319-1292 (JP); KONNO, Takeo, Narashino-shi Chiba 275-8611 (JP); ABE, Keisuke, Narashino-shi Chiba 275-8611 (JP); SUZUKI, Norinaga, Narashino-shi Chiba 275-8611 (JP)
(74) Representative: MERH-IP Matias Erny Reichl Hoffmann
(86) International application number: PCT/JP2010/001889
(87) International publication number: WO 2011/114371

(57) **Abstract**

The purpose of the invention is to provide an inverter-driven dynamo electric machine and system for the same having high reliability and high efficiency such that even in the case of inverter pulse voltages having high dv/dt, generation of shaft voltages and generation of shaft currents causing electric corrosion of a bearing with the generation of the shaft voltages are suppressed, thereby keeping the bearing free of electric corrosion.

The purpose of the invention is achieved by the following method. That is, the purpose is achieved by an inverter-driven dynamo electric machine and system for the same including at least one machine support bearing which supports a shaft of a rotor, and one electric discharge bearing which discharges the voltage generated in the shaft of the rotor, wherein a bearing having a lower dielectric breakdown voltage between an inner ring and an outer ring than that of the machine support bearing is used as the electric discharge bearing.

Accordingly, this can provide an inverter-driven dynamo electric machine and system for the same having high reliability and high efficiency such that the bearing is not electrically corroded with respect to the inverter pulse voltage.

## Description

### TECHNICAL FIELD

The present invention relates to a dynamo electric machine driven by an inverter and a system therefor.

From the aspect of saving of energy, a variable-speed operation of a dynamo electric machine using an inverter power supply is actively performed recently in various fields such as power, industry, automobile, railroad, and household appliances. However, in the dynamo electric machine, there arise various problems such as bearing electric corrosion, insulation, and EMI/EMC along with inverter drive, and a development of a countermeasure technique to the above problems is performed.

With regard to a countermeasure technique of the bearing electric corrosion of dynamo electric machines or driving force transmission devices along with the inverter drive, [Patent literature 1], [Patent literature 2], [Patent literature 3], and [Patent literature 4] are conventionally disclosed.

### CITATION LIST

### PATENT LITERATURE

Patent literature 1: Japanese Laid-open Patent Publication No. 2008-45697
Patent literature 2: WO 01/036832
Patent literature 3: Japanese Laid-open Patent Publication No. 09-291943
Patent literature 4: Japanese Laid-open Patent Publication No. 2003-324489

### SUMMARY OF INVENTION

### TECHNICAL PROBLEM

Incidentally, in the above-described countermeasure techniques, there is a problem that a shaft voltage and a shaft current (or, a bearing current) causing bearing electric corrosion fail to be suppressed. A conductive sealing material disclosed in [Patent literature 1], conductive grease disclosed in [Patent literature 2], a conductive flexible material disclosed in [Patent literature 3], and a method for using a frictional contact pressurization spring and reducing a shaft voltage disclosed in [Patent literature 4], for example, in the case of an inverter pulse voltage in which a voltage change rate dv/dt is large, a large displacement current i=C·dv/dt flows through the above conductive members or contact resistance portions of a pressurization spring. A voltage of V=r·i is further generated on these resistance portions (resistance value r), and as a result, a shaft voltage generated in a shaft of a rotor cannot be suppressed. Since the shaft voltage cannot be suppressed, a voltage is applied between an inner ring and an outer ring of bearing positioning between a shaft and a housing (earth). As a result, an oil film of grease on the bearing is dielectrically broken and an arc discharge shaft current generated along with dielectric breakdown of an oil film, namely, a shaft current causing electric corrosion of the bearing cannot be suppressed.

Incidentally, since a switching loss is reduced in an inverter and a converter efficiency is improved, dv/dt of a power device to be used as the inverter tends to be raised recently. As a result, it is feared that in the future, in a conventional bearing electric corrosion measure, the bearing electric corrosion cannot be prevented and it becomes difficult to provide a reliable dynamo electric machine in which the bearing electric corrosion is not generated. Against the above-described problem, measures to limit dv/dt of the power device of the inverter are considered. However, it is feared that since converter efficiency of the inverter cannot be improved, efficient inverter and inverter-driven dynamo electric machine system cannot be provided in the future.

In view of the foregoing, it is an object of the present invention to provide a reliable and efficient inverter-driven dynamo electric machine and system therefor which suppress generation of a shaft voltage and that of a shaft current generated along with the above, and in which the bearing is not electrically corroded also with respect to an inverter pulse voltage having high dv/dt.

### SOLUTION TO PROBLEM

To attain the problem, in a dynamo electric machine of the invention, at least one bearing or bearing group having different electrical discharge characteristic and mechanical characteristic is used in left and right of a rotor shaft.

A dynamo electric machine to be driven by an inverter includes at least one machine support bearing configured to support a rotor shaft, and at least one electric discharge bearing configured to discharge a voltage generated in the rotor shaft, wherein the electric discharge bearing includes a bearing having a lower dielectric breakdown voltage between an inner ring and an outer ring than the dielectric breakdown voltage of the machine support bearing.

In the dynamo electric machine, grease having a dielectric breakdown voltage lower than that of the machine support bearing is used for the electric discharge bearing.

In the dynamo electric machine, unevenness is provided between an inner ring and outer ring of the electric discharge bearing, and a dielectric breakdown voltage between the inner ring and outer ring of the electric discharge bearing is set to be lower than that between the inner ring and outer ring of the machine support bearing.

The dynamo electric machine further includes at least one machine support bearing configured to support the rotor shaft, and at least one electric discharge bearing configured to discharge a voltage generated in the rotor shaft, wherein grease having relative permittivity higher than that of the machine support bearing is used for the electric discharge bearing.

In the bearing for a dynamo electric machine, a bearing discharges a voltage generated in a rotor shaft of the dynamo electric machine.

In the bearing for a dynamo electric machine, unevenness is provided on a surface of any of an inner ring and an outer ring, or facing surfaces of both of the inner ring and the outer ring.

In the bearing for a dynamo electric machine, needle-like projections are provided on a surface of any of an inner ring and an outer ring, or facing surfaces of both of the inner ring and the outer ring.

In the bearing for a dynamo electric machine, groove projections are provided in a circumferential direction on a surface of any of an inner ring and an outer ring, or facing surfaces of both of the inner ring and the outer ring.

In the bearing for a dynamo electric machine, an electric discharge bearing and a machine support bearing are integrated.

In an end bracket, the bearing for a dynamo electric machine is built in.

An inverter-driven dynamo electric machine system includes the above-described dynamo electric machine, bearing, and end bracket.

### ADVANTAGEOUS EFFECTS OF INVENTION

The present embodiments provide an inverter-driven dynamo electric machine, a system, bearing, and end bracket for the same having high reliability and high efficiency such that the bearing is not electrically corroded with respect to the inverter pulse voltage.

### BRIEF DESCRIPTION OF DRAWINGS

[Fig. 1] FIG 1 illustrates a dynamo electric machine according to a first embodiment;
[Fig. 2] FIG 2 illustrates a common mode voltage, a shaft voltage, and a shaft current at the time of rotating a conventional dynamo electric machine and the dynamo electric machine according to a first embodiment;
[Fig. 3] FIG 3 illustrates an electric discharge bearing of a dynamo electric machine according to a first embodiment;
[Fig. 4] FIG 4 illustrates another mode of an electric discharge bearing;
[Fig. 5] FIG 5 illustrates another mode of an electric discharge bearing;
[Fig. 6] FIG 6 illustrates another mode of an electric discharge bearing;
[Fig. 7] FIG 7 illustrates another mode of an electric discharge bearing;
[Fig. 8] FIG 8 illustrates another mode of an electric discharge bearing;
[Fig. 9] FIG 9 illustrates another mode of an electric discharge bearing;
[Fig. 10] FIG 10 illustrates a structure in which an electric discharge bearing and a machine support bearing are integrated;
[Fig. 11] FIG 11 illustrates a hybrid bearing in which a function of an electric discharge bearing and that of a machine support bearing are integrated;
[Fig. 12] FIG. 12 illustrates a dynamo electric machine according to a second embodiment;
[Fig. 13] FIG. 13 illustrates a dynamo electric machine according to a third embodiment;
[Fig. 14] FIG 14 illustrates a dynamo electric machine according to a fourth embodiment;
[Fig. 15] FIG 15 illustrates a dynamo electric machine according to a fifth embodiment;
[Fig. 16] FIG 16 illustrates a dynamo electric machine according to a sixth embodiment;
[Fig. 17] FIG 17 illustrates a dynamo electric machine according to a seventh embodiment;
[Fig. 18] FIG 18 illustrates a dynamo electric machine according to an eighth embodiment;
[Fig. 19] FIG 19 illustrates an external end bracket in which an electric discharge bearing is built and a dynamo electric machine according to a ninth embodiment;
[Fig. 20 FIG 20 illustrates an external end bracket in which an electric discharge bearing is built and a dynamo electric machine according to a tenth embodiment;
[Fig. 21 FIG 21 illustrates a characteristic of grease of a conventional technology; and
[Fig. 22] FIG 22 illustrates a characteristic of grease according to the present invention.

### DESCRIPTION OF EMBODIMENTS

Preferred embodiments of the present invention will now be described in detail below with reference to the accompanying drawings.

### FIRST EMBODIMENT

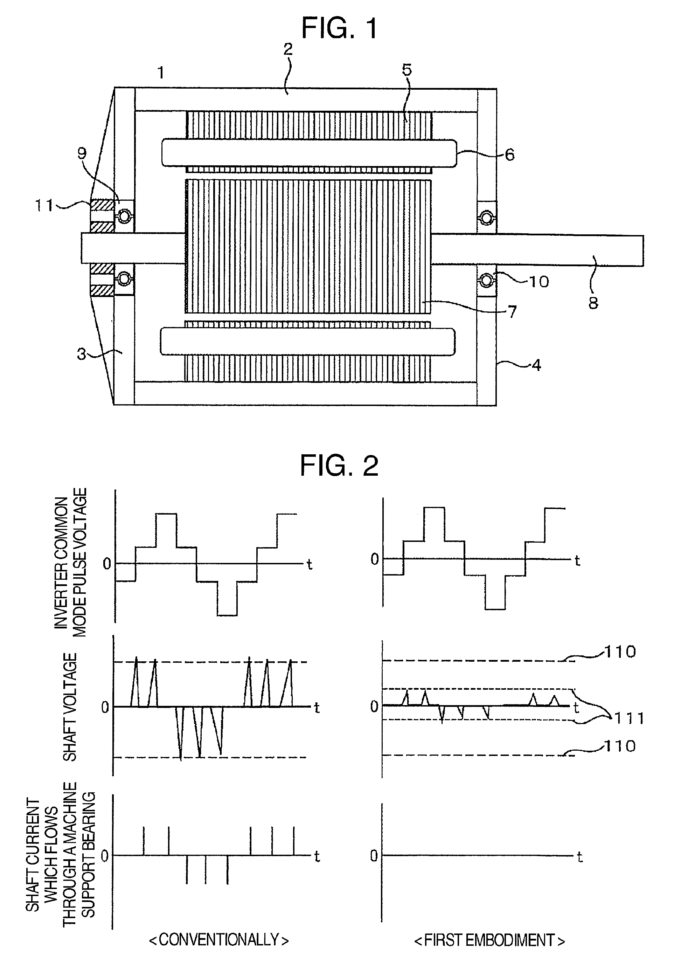

FIG 1 illustrates a dynamo electric machine according to a first embodiment. The dynamo electric machine 1 includes a stator 5 storing a stator winding 6 and a rotor 7 rotating according to a rotating magnetic field. These units are stored in a housing 2 and end brackets 3 and 4. A shaft 8 of the rotor 7 is mechanically supported by machine support bearings 9 and 10 attached to the end brackets 3 and 4. Since the machine support bearings 9 and 10 mechanically support the shaft 8 of the rotor 7 radially and axially, a mechanical stress is not applied to an electric discharge bearing 11 provided on the end bracket 3 of a non-load side.

On the other hand, for the electric discharge bearing, there is used grease having a dielectric breakdown voltage lower than that to the machine support bearings 9 and 10, preferably, grease which is low by 0.1 V or more in the range of the rotation number to be used. Before broken dielectrically in the machine support bearing, an oil film is set to be broken dielectrically in the electric discharge bearing. That is, an electrical stress caused by an inverter (not illustrated) which drives the dynamo electric machine is set to be supported by the electric discharge bearing and not to be applied to the machine support bearing.

FIG 2 illustrates an inverter common mode voltage applied to a dynamo electric machine, a shaft voltage generated between the shaft 8 of the dynamo electric machine and a grounding wire, and a shaft current flowing through the machine support bearing at the time of rotating by an inverter a conventional dynamo electric machine and the dynamo electric machine according to the first embodiment. In the case where the same common mode pulse voltage of the inverter is applied, a shaft current is generated in a voltage change part (a rising edge and a falling edge) of the common mode voltage in the conventional dynamo electric machine. At the time when this shaft voltage is larger than an oil film dielectric breakdown voltage 110 of the machine support bearing, a pulse shaft current along with the oil film dielectric breakdown flows through the machine support bearing. On the contrary, in the dynamo electric machine according to the first embodiment, a shaft voltage is suppressed by the oil film dielectric breakdown voltage 111 of the electric discharge bearing. Since the shaft voltage does not reach the oil film dielectric breakdown voltage 110 of the machine support bearing, the shaft current does not flow through the machine support bearing. As a result, electric corrosion is not generated in the machine support bearing and, also at the time of rotating the dynamo electric machine by the inverter for a long time, washboard-shape grooves are provided on a race surface of the machine support bearing. There are solved a problem that at the time of rotating the rotor 7, the shaft 8 is vibrated to cause noises, and further, a problem that the electric corrosion progresses to peel off a race surface of the machine support bearing, and the machine support bearing and the dynamo electric machine using the same break down. On the other hand, a shaft current along with an oil film breakdown is generated or electric corrosion on a bearing along with the shaft current occurs on the electric discharge bearing. However, since the mechanical stress is not applied, also at the time of rotating the rotor 7, there is no problem that the shaft 8 is vibrated to generate noises, or a race surface is peeled off.

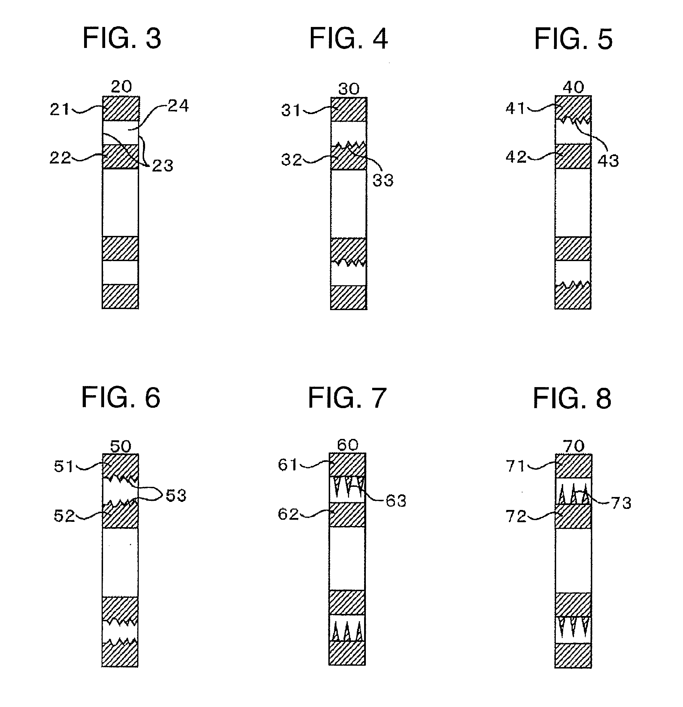

FIG 3 illustrates a detailed configuration diagram of the electric discharge bearing according to the first embodiment. The electric discharge bearing 20 includes an inner ring 22 and an outer ring 21, and a space 24 between both of them is filled with grease. In addition, for preventing an outflow of the grease, seal plates 23 are attached to the left and right sides. As grease, there is used grease having a dielectric breakdown voltage lower than that of the grease used in the machine support bearing. However, since characteristics except the dielectric breakdown voltage may be freely selected, grease which is usually unusable in the machine support bearing in terms of mechanical loss may be widely used.

FIGS. 4 to 9 each illustrate a configuration example of another electric discharge bearing. In the electric discharge bearing 30 of FIG 4, when a race surface 33 of an inner ring 32 is mesh-processed in an outer ring 31 and the inner ring 32, electric field concentration points on a surface are increased and a dielectric breakdown voltage of an oil film is reduced. A surface is polished, a surface is polished by using abrasive powder, or a surface is plasma-processed, thereby implementing the mesh processing. As compared with the above, in the electric discharge bearing 40 of FIG 5, a race surface 43 of an outer ring 41 is mesh-processed in the outer ring 41 and an inner ring 42. Through the process, the electric field concentration points on a surface are increased and a dielectric breakdown voltage of an oil film is reduced. Further, in the electric discharge bearing 50 of FIG 6, when race surfaces 53 of both an outer ring 51 and an inner ring 52 are mesh-processed, the electric field concentration points on a surface are increased and a dielectric breakdown voltage of an oil film is reduced.

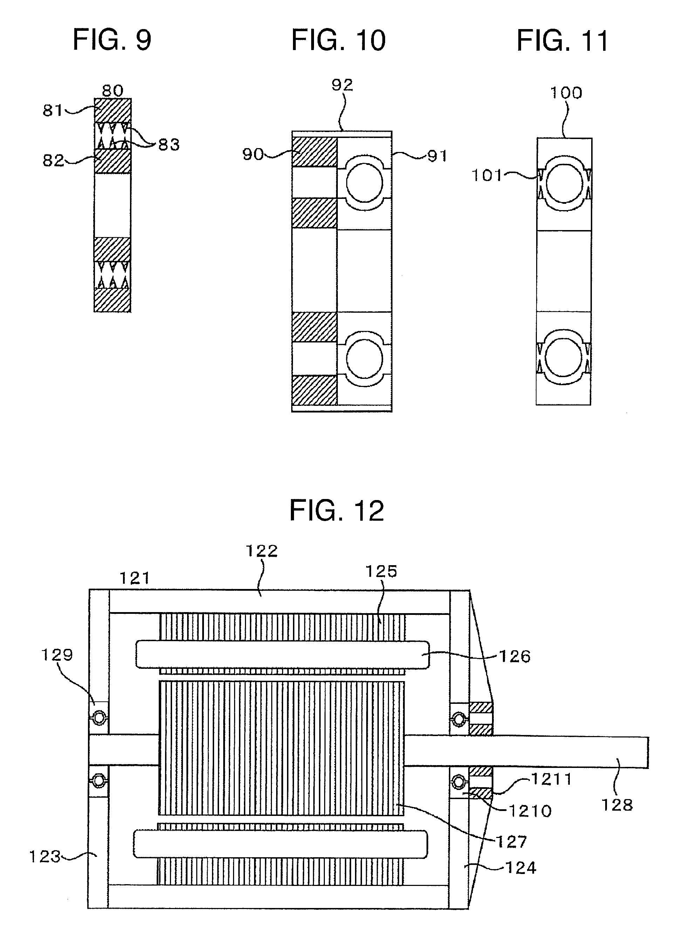

On the other hand, in an electric discharge bearing 60 of FIG 7, when uneven grooves are provided on a race surface 63 of an outer ring 61 in the outer ring 61 and an inner ring 62, a concentration electric field on a surface is raised and the dielectric breakdown voltage of an oil film is reduced. In the same manner, in an electric discharge bearing 70 of FIG 8, when uneven grooves are provided on a race surface 73 of an outer ring 71 in the outer ring 71 and an inner ring 72, a concentration electric field on a surface is raised and a dielectric breakdown voltage of an oil film is reduced. Further, in an electric discharge bearing 80 of FIG. 9, when uneven grooves are provided on both race surfaces 83 of an outer ring 81 and an inner ring 82, a concentration electric field on a surface is raised and a dielectric breakdown voltage of an oil film is reduced. In FIGS. 7 to 9, grooves are provided, and further needle-like projections may be provided on a surface.

In the above-described bearings of FIGS. 4 to 9, when uneven grooves are processed to a race surface of the bearing, the dielectric breakdown voltage of an oil film may be controlled and various types of grease may be used in the electric discharge bearing. Specifically, grease having a dielectric breakdown voltage lower than that of the machine support bearing ought to be used in the bearing of FIG 3. However, as in FIGS. 4 to 9, when processing is applied to a race surface of the bearing, grease having a dielectric breakdown voltage the same as or higher than that of the machine support bearing may be used.

FIG 10 illustrates a bearing in which an electric discharge bearing and a machine support bearing are integrated. In the bearing of FIG 10, the electric discharge bearing 90 and the machine support bearing 91 are held by a ring 92 on the outer ring side. In FIG 1, the electric discharge bearing and the machine support bearing are separated from each other, and a jig for matching a center of the outer ring of the mechanically-free electric discharge bearing with that of the machine support bearing is necessary. However, when using a hybrid bearing, a center of the outer ring of the electric discharge bearing and that of the machine support bearing are easily matched with each other.

FIG 11 illustrates the hybrid bearing in which a function of the electric discharge bearing and that of the machine support bearing are integrated. In the hybrid bearing 100, a groove 101 for concentrating an electric field is provided in the inner ring and outer ring of the machine support bearing. When adopting the above-described method, since two types of bearings need not be used, an axial direction thickness of the end bracket of the dynamo electric machine is reduced.

### SECOND EMBODIMENT

FIG 12 illustrates a dynamo electric machine according to a second embodiment. In the first embodiment, the electric discharge bearing is provided in the end bracket of the non-load side; however, the electric discharge bearing is provided in the end bracket of the load side in the second embodiment. Specifically, the dynamo electric machine 121 includes a stator 125 storing a stator winding 126 and a rotor 127 rotating according to a rotating magnetic field. The above-described units are stored in a housing 122 and the end brackets 123 and 124. A shaft 128 of the rotor 127 is mechanically supported by machine support bearings 129 and 1210 attached to the end brackets 123 and 124. Since the machine support bearings 129 and 1210 mechanically support the shaft 128 of the rotor 127 radially and axially, a mechanical stress is not applied to an electric discharge bearing 1211 provided on the end bracket 124 of the load side.

Since a mechanical stress is not applied to the electric discharge bearing of the invention, the electric discharge bearing may be provided on the load side as in the second embodiment. In the case where an interval between the dynamo electric machine and a machine load (not illustrated) connected to the shaft 128 is wide, when the electric discharge bearing is provided on the end bracket of the load side as described above, a size of the entire inverter-driven dynamo electric machine system including the machine load is made the same as a conventional size.

### THIRD EMBODIMENT

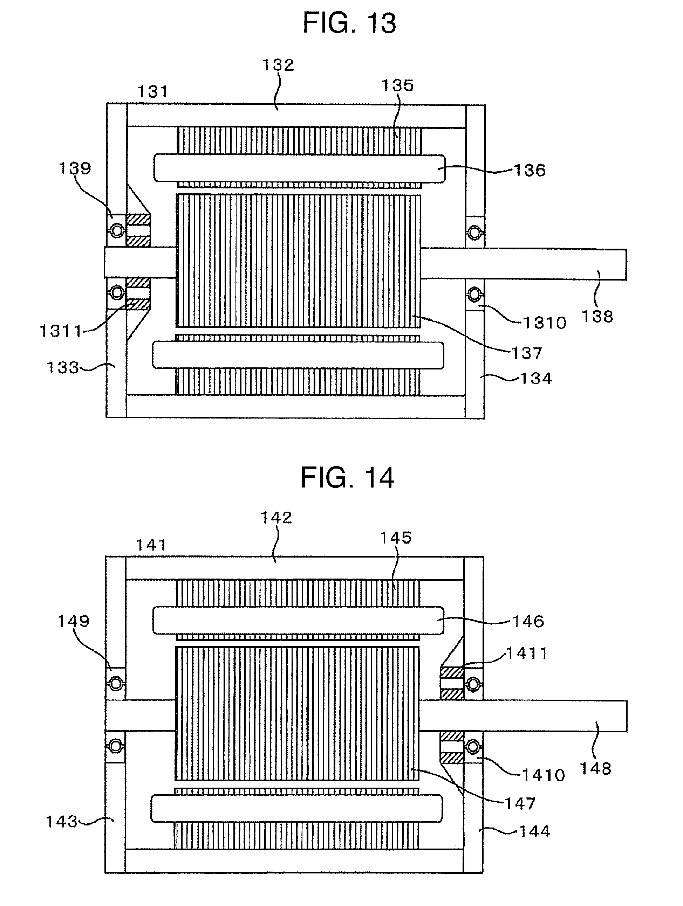

FIG 13 illustrates a dynamo electric machine according to a third embodiment. In the first embodiment, the electric discharge bearing is externally provided in the end bracket of the non-load side; however, the electric discharge bearing is internally provided in the end bracket of the non-load side in the third embodiment. Specifically, the dynamo electric machine 131 includes a stator 135 storing a stator winding 136 and a rotor 137 rotating according to a rotating magnetic field. The above-described units are stored in a housing 132 and the end brackets 133 and 134. A shaft 138 of the rotor 137 is mechanically supported by machine support bearings 139 and 1310 attached to the end brackets 133 and 134. Since the machine support bearings 139 and 1310 mechanically support the shaft 138 of the rotor 137 radially and axially, a mechanical stress is not applied to the electric discharge bearing 1311 provided on the end bracket 133 of the non-load side.

In the dynamo electric machine in which a space between the end bracket 133 of the non-load side and both the stator winding 136 and the stator 135 is wide, the electric discharge bearing may be provided in the dynamo electric machine as described above.

### FOURTH EMBODIMENT

FIG 14 illustrates a dynamo electric machine according to a fourth embodiment. In the third embodiment, the electric discharge bearing is internally provided in the end bracket of the non-load side; however, the electric discharge bearing is internally provided in the end bracket of the load side in the fourth embodiment. Specifically, the dynamo electric machine 141 includes a stator 145 storing a stator winding 146 and a rotor 147 rotating according to a rotating magnetic field. The above-described units are stored in a housing 142 and the end brackets 143 and 144. A shaft 148 of the rotor 147 is mechanically supported by machine support bearings 149 and 1410 attached to the end brackets 143 and 144. Since the machine support bearings 149 and 1410 mechanically support the shaft 148 of the rotor 147 radially and axially, a mechanical stress is not applied to the electric discharge bearing 1411 provided on the end bracket 144 of the load side.

In the dynamo electric machine in which a space between the end bracket 144 of the load side and both the stator winding 146 and the stator 145 is wide, the electric discharge bearing may be provided in the dynamo electric machine as described above.

### FIFTH EMBODIMENT

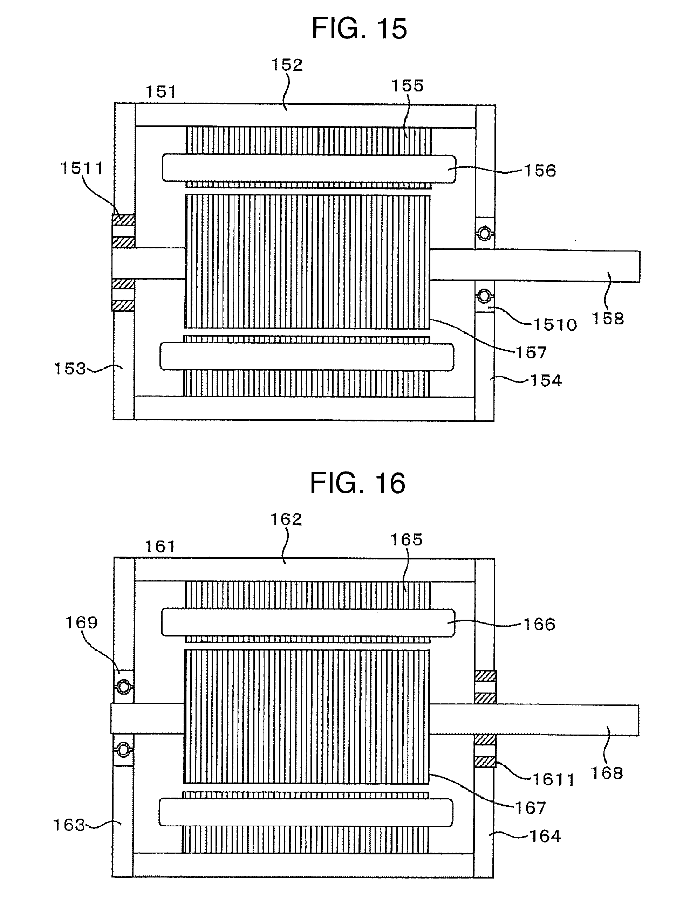

FIG 15 illustrates a dynamo electric machine according to a fifth embodiment. In the first to fourth embodiments, the dynamo electric machine on which two machine support bearings are provided is disclosed, respectively. In a dynamo electric machine capable of supporting a shaft by one machine support bearing, an electric discharge bearing may be provided on an end bracket different from that on which the machine support bearing is provided. Specifically, the dynamo electric machine 151 includes a stator 155 storing a stator winding 156 and a rotor 157 rotating according to a rotating magnetic field. The above-described units are stored in a housing 152 and the end brackets 153 and 154. A shaft 158 of the rotor 157 is mechanically supported by machine support bearing 1510 attached to the end bracket 154. Since the machine support bearing 1510 mechanically supports the shaft 158 of the rotor 157 radially and axially, a mechanical stress is not applied to the electric discharge bearing 1511 provided on the end bracket 153 of the non-load side.

In the dynamo electric machine capable of supporting a shaft by one machine support bearing as described above, or also in the dynamo electric machine capable of supporting a shaft by two machine support bearings conventionally, a machine support bearing enough to bear a mechanical force radially and axially is used. In this case, the fifth embodiment permits an electric discharge bearing to be provided on the other end bracket and a size of a dynamo electric machine to be made the same as that of a conventional dynamo electric machine.

### SIXTH EMBODIMENT

FIG 16 illustrates a dynamo electric machine according to a sixth embodiment. In the fifth embodiment, the machine support bearing is provided in the end bracket of the load side, and the electric discharge bearing is provided in the end bracket of the non-load side, and vice versa. Specifically, the dynamo electric machine 161 includes a stator 165 storing a stator winding 166 and a rotor 167 rotating according to a rotating magnetic field. The above-described units are stored in a housing 162 and the end brackets 163 and 164. A shaft 168 of the rotor 167 is mechanically supported by the machine support bearing 169 attached to the end bracket 163. Since the machine support bearing 169 mechanically supports the shaft 168 of the rotor 167 radially and axially, a mechanical stress is not applied to the electric discharge bearing 1611 provided on the end bracket 154 of the load side.

In general, a machine support bearing is provided on an end bracket of a load side in terms of balance. In the case where the machine support bearing is balanced with a bearing of a machine load, the machine support bearing may be provided on the non-load side, and the electric discharge bearing may be provided on the load side. Through the process, a shaft voltage is reduced in a position near to the machine support bearing and the bearing of the machine load may be protected.

### SEVENTH EMBODIMENT

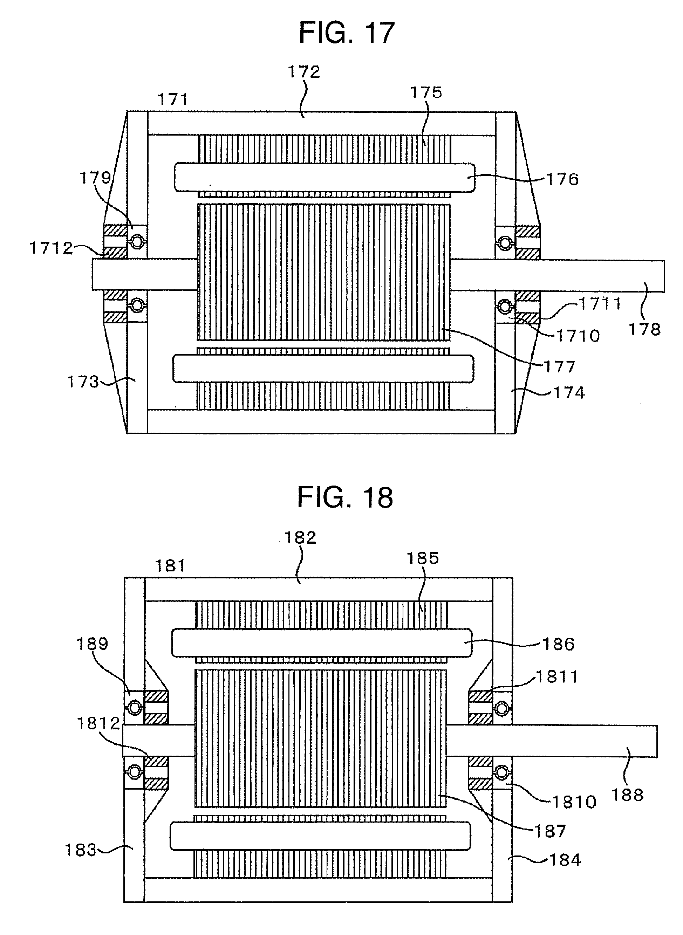

FIG 17 illustrates a dynamo electric machine according to a seventh embodiment. In the first to sixth embodiments, one electric discharge bearing is provided and further two electric discharge bearings may be provided. Specifically, the dynamo electric machine 171 includes a stator 175 storing a stator winding 176 and a rotor 177 rotating according to a rotating magnetic field. The above-described units are stored in a housing 172 and end brackets 173 and 174. A shaft 178 of the rotor 177 is mechanically supported by machine support bearings 179 and 1710 attached to the end brackets 173 and 174. Since the machine support bearings 179 and 1710 mechanically support the shaft 178 of the rotor 177 radially and axially, a mechanical stress is not applied to electric discharge bearings 1711 and 1712 provided on the end brackets 173 and 174 of the load side.

A shaft voltage or shaft current to become problematic in an inverter-driven dynamo electric machine may become large when a size of the dynamo electric machine or a capacity thereof becomes large depending on the type or generation mechanism. In this case, when providing two electric discharge bearings, a shaft current flowing through one electric discharge bearing may be reduced to half and a life of the electric discharge bearing may be enlarged. A plurality of electric discharge bearings may be further provided from the same reason. In addition, when the plurality of electric discharge bearings are provided on the load and non-load sides of the dynamo electric machine as described above, a shaft current flowing in cycles through a shaft impossible to cope with by one electric discharge bearing is not allowed to flow through a machine support bearing but allowed to flow through an electric discharge bearing, thereby coping with the above-described problem.

### EIGHTH EMBODIMENT

FIG 18 illustrates a dynamo electric machine according to an eighth embodiment. In the seventh embodiment, the electric discharge bearing is externally provided in the end bracket, and further may be internally provided in the end bracket. Specifically, the dynamo electric machine 181 includes a stator 185 storing a stator winding 186 and a rotor 187 rotating according to a rotating magnetic field. The above-described units are stored in a housing 182 and the end brackets 183 and 184. A shaft 188 of the rotor 187 is mechanically supported by machine support bearings 189 and 1810 attached to the end brackets 183 and 184. Since the machine support bearings 189 and 1810 mechanically support the shaft 188 of the rotor 187 radially and axially, a mechanical stress is not applied to the electric discharge bearings 1811 and 1812 provided on the end brackets 183 and 184 of the load side.

In the case where a space between the end brackets 183 and 184 and both the stator winding 186 and stator 185 of the dynamo electric machine 181 is empty, the electric discharge bearings 1811 and 1812 may be internally provided on the end brackets 183 and 184 as described above, and a size of the dynamo electric machine may be made the same as that of a conventional dynamo electric machine.

### NINTH EMBODIMENT

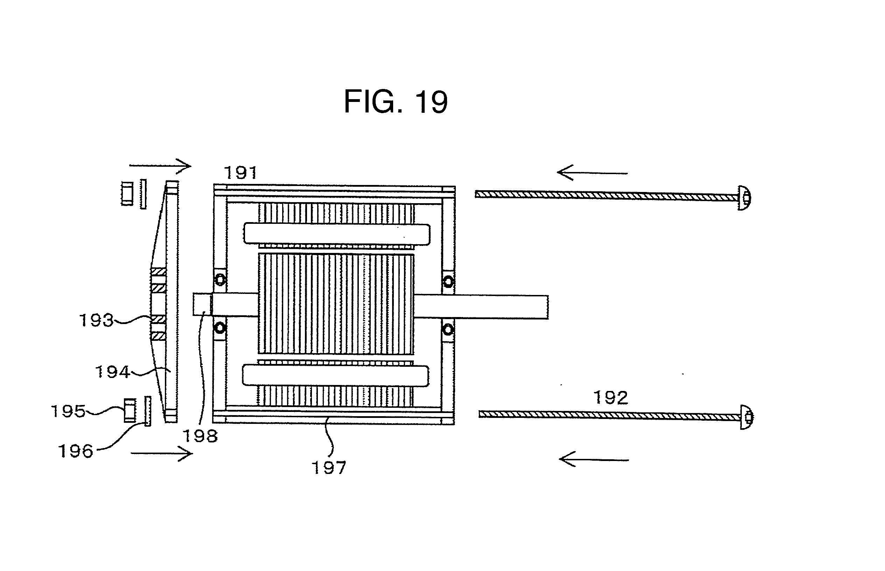

FIG 19 illustrates a dynamo electric machine according to a ninth embodiment. In the first to eighth embodiments, the electric discharge bearing is provided in the end bracket of the dynamo electric machine. As compared with the above, in the ninth embodiment, the end bracket in which the electric discharge bearing is provided is additionally provided from the outside of the dynamo electric machine. Specifically, the dynamo electric machine has a hole 197 into which a bolt 192 for fixing an external end bracket is inserted. Toward an extension drive shaft 198 of the dynamo electric machine 191, the end bracket 194 on which the electric discharge bearing 193 is provided is pressed from the non-load side and clamped by using washers 196, nuts 195, and bolts 192. In addition, a direction in which the bolts 192, the washers 196, and the nuts 195 are inserted may be any of the load side and the non-load side.

As described above, when the end bracket on which the electric discharge bearing is provided is attached externally, electric corrosion preventive measures of the bearing are implemented also to the existing dynamo electric machine.

### TENTH EMBODIMENT

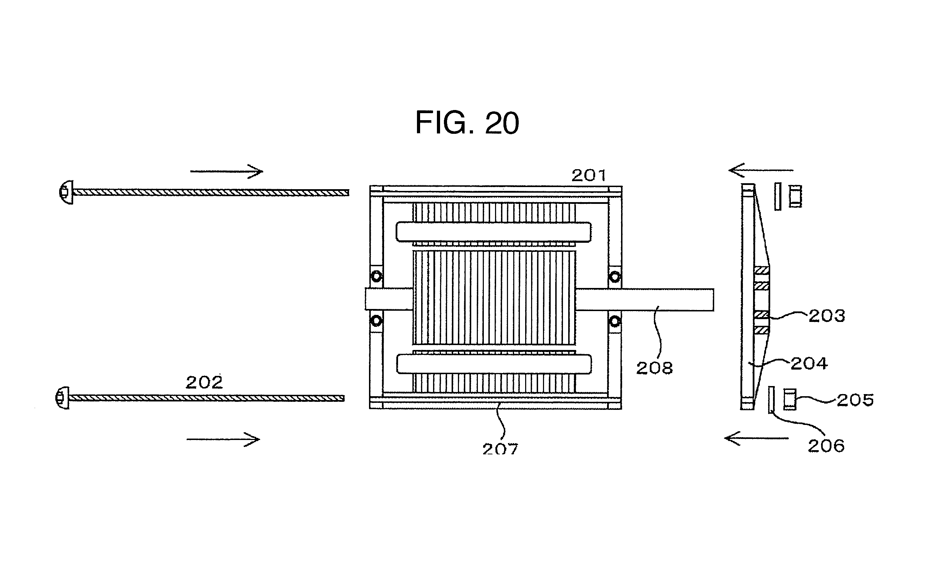

FIG 20 illustrates a dynamo electric machine according to a tenth embodiment. In the ninth embodiment, the end bracket on which the electric discharge bearing is provided is additionally provided from the non-load side of the dynamo electric machine. As compared with the above, in the tenth embodiment, the end bracket on which the electric discharge bearing is provided is additionally provided from the load side of the dynamo electric machine. Specifically, the dynamo electric machine has a hole 207 into which a bolt 202 for fixing the external end bracket is inserted. Toward the shaft 208 of the dynamo electric machine 201, the end bracket 204 on which the electric discharge bearing 203 is provided is pressed from the load side and clamped by using washers 206, nuts 205, and bolts 202. In addition, a direction in which the bolts 202, the washers 206, and the nuts 205 are inserted may be any of the load side and the non-load side.

In the case where an interval between the dynamo electric machine and a machine load connected to the shaft 208 is wide, the external end bracket is provided on the load side as described above and electric corrosion preventive measures of the bearing are implemented also to the existing dynamo electric machine.

### ELEVENTH EMBODIMENT

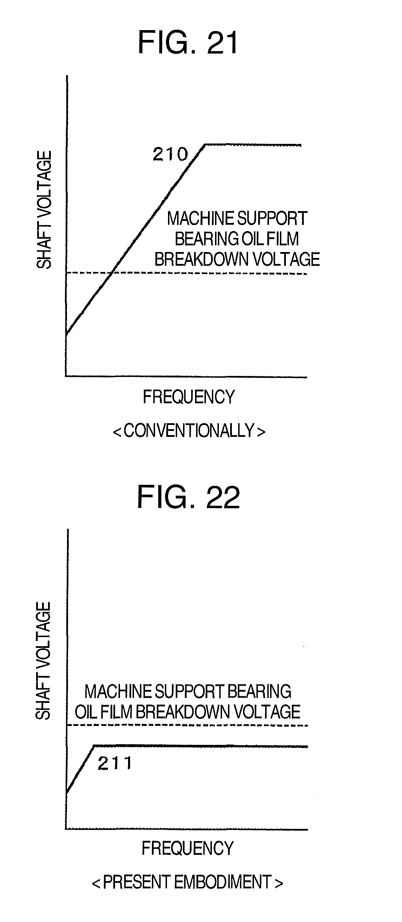

FIGs.21 and 22 illustrate the present embodiment of characteristics of grease to be used for a dynamo electric machine of the invention. A structure of the dynamo electric machine is applicable to any of the first to tenth embodiments. In the first to tenth embodiments, a shaft voltage is suppressed by an oil film breakdown of the electric discharge bearing. In addition, high-frequency impedance is reduced, thereby suppressing a shaft voltage. In short, as illustrated in a conventional example of FIG 21, there is used grease having high impedance to high frequency for keeping insulation characteristic along with lubricity of oil films as indicated in 210 in a normal bearing. As illustrated in FIG 22, in the eleventh embodiment of the invention, the electric discharge bearing is newly provided apart from the machine support bearing. When grease having high relative permittivity to the machine support bearing is used for the electric discharge bearing, impedance is reversely reduced to high frequency and a shaft voltage is suppressed to less than oil film dielectric breakdown voltage of the machine support bearing. Therefore, with relation to an inverter pulse voltage having high dv/dt and large high frequency component occupied in a voltage waveform, oil film dielectric breakdown is not caused by the machine support bearing and electric corrosion of the bearing may be prevented.

### INDUSTRIAL APPLICABILITY

The present invention is applicable to a dynamo electric machine driven by an industrially applicable inverter and a system for the same.

### REFERENCE SIGNS LIST

- 1: Dynamo electric machine
- 2: Housing
- 3, 4: End bracket
- 5: Stator
- 6: Stator winding
- 7: Rotor
- 8: Shaft
- 9, 10: Machine support bearing
- 11: Electric discharge bearing

## Claims

1. A dynamo electric machine to be driven by an inverter, comprising:
at least one bearing or bearing group, the bearing or bearing group having different electrical discharge characteristic and mechanical characteristic being used in left and right of a rotor shaft.

2. A dynamo electric machine to be driven by an inverter, comprising:
at least one machine support bearing configured to support the rotor shaft; and
at least one electric discharge bearing configured to discharge a voltage generated in the rotor shaft,
wherein the electric discharge bearing includes a bearing having a lower dielectric breakdown voltage between an inner ring and an outer ring than the dielectric breakdown voltage of the machine support bearing.

3. The dynamo electric machine according to claim 1 or 2, wherein grease having a dielectric breakdown voltage lower than that of the machine support bearing is used for the electric discharge bearing.

4. The dynamo electric machine according to claim 1 or 2, wherein:
unevenness is provided between an inner ring and outer ring of the electric discharge bearing; and
a dielectric breakdown voltage between the inner ring and outer ring of the electric discharge bearing is set to be lower than that between the inner ring and outer ring of the machine support bearing.

5. The dynamo electric machine according to claim 1, further comprising:
at least one machine support bearing configured to support the rotor shaft; and
at least one electric discharge bearing configured to discharge a voltage generated in the rotor shaft,
wherein grease having relative permittivity higher than that of the machine support bearing is used for the electric discharge bearing.

6. A bearing for a dynamo electric machine, wherein the bearing discharges a voltage generated in a rotor shaft of the dynamo electric machine.

7. The bearing for a dynamo electric machine according to claim 6, wherein unevenness is provided on a surface of any of an inner ring and an outer ring, or facing surfaces of both of the inner ring and the outer ring.

8. The bearing for a dynamo electric machine according to claim 7, wherein needle-like projections are provided on a surface of any of an inner ring and an outer ring, or facing surfaces of both of the inner ring and the outer ring.

9. The bearing for a dynamo electric machine according to claim 7, wherein groove projections are provided in a circumferential direction on a surface of any of an inner ring and an outer ring, or facing surfaces of both of the inner ring and the outer ring.

10. The bearing for a dynamo electric machine according to any one of claims 6 to 9, wherein an electric discharge bearing and a machine support bearing are integrated.

11. An end bracket to build in the bearing for a dynamo electric machine according to any one of claims 6 to 10.

12. An inverter-driven dynamo electric machine system comprising:
a dynamo electric machine according to any of claims 1 to 5;
a bearing according to any of claims 6 to 10; and
an end bracket according to claim 11.
